# EUROPEAN PATENT APPLICATION

(11) **EP 4 620 647 A1**
(43) Date of publication of application: **24.09.2025**
(21) Application number: 23891429.5
(22) Date of filing: 07.11.2023
(51) Int. Cl.: B29B 15/08, B29C 70/16, B29C 70/32, C08J 11/16, D06M 10/00, D06M 11/00

(54) **REINFORCEMENT, METHOD FOR PRODUCING REINFORCEMENT, METHOD FOR PRODUCING COMPOSITE MATERIAL, AND COMPOSITE MATERIAL**

(30) Priority: 14.11.2022 JP 2022181999
(71) Applicant: Asahi Kasei Kabushiki Kaisha, Tokyo 1000006 (JP)
(72) Inventor: OKADA, Yuji, Tokyo 100-0006 (JP)
(74) Representative: Hoffmann Eitle
(86) International application number: PCT/JP2023/040104
(87) International publication number: WO 2024/106277

(57) **Abstract**

To provide a reinforcement material that has a sufficient amount of functional groups on the surface and exhibits excellent surface adhesion so as to be able to composite with a resin. In order to solve the above issue, the present disclosure provides a reinforcement material that is a continuous fiber and has a total acidic functional group concentration on the surface of the reinforcement material of 0.4 mmol/g or more and 4.0 mmol/g or less.

## Description

### TECHNICAL FIELD

The present disclosure relates to a reinforcement material, a method for manufacturing a reinforcement material, a method for manufacturing a composite material, and a composite material.

### BACKGROUND

Reinforced composite materials are materials formed by compositing a resin that is the base material with a reinforcement material, such as carbon fibers, glass fibers, carbon fibers, glass fibers, metal fibers, organic high-strength fibers, an inorganic filler, a metal-based filler, carbon nanotubes, and cellulose nanofibers. Their characteristic is that they have high strength and are lighter compared to metals such as iron. Utilizing this characteristic, reinforced composite materials have begun to be used not only in some automobiles, aircraft, etc., but also in other application, such as wind turbine blades, as a material that significantly contributes to improving energy efficiency.

Here, a carbon fiber, which is a reinforcement material for a carbon fiber reinforced plastic, is first produced by synthesizing a chemical substance called acrylonitrile from petroleum and manufacturing acrylic fiber by spinning it into threads. Then, a carbon fiber is produced by performing a carbonization process at an extremely high temperature of several thousand degrees. Carbon fibers are sometimes used as is, but in most cases, they are processed into various forms such as continuous fibers, nonwoven fabrics, and chopped fibers. Furthermore, by being composited with various types of resin, they are used as a carbon fiber reinforced plastic (CFRP), which is one type of composite reinforced material.

A carbon fiber reinforced plastic has excellent material properties such as being strong, hard, rust-resistant, and rot-resistant. However, due to the excellent material properties thereof, the disposal method thereof has become an issue. General plastics can be easily burned, but carbon fibers have a highly graphitized structure, making them difficult to burn. For this reason, in Japan, scraps and waste materials of a carbon fiber reinforced plastic are crushed and then disposed of in landfills as industrial waste. Crushed and landfilled carbon fibers do not biodegrade and become a cause of marine plastic pollution.

Due to such circumstances, in recent years, methods for separating and recovering reinforcement materials from used composite reinforced materials for reuse have been proposed.

For example, there is a method of processing a carbon fiber reinforced plastic at a high temperature of 500 to 700 °C in a low-oxygen atmosphere to thermally decompose the resin component, which is the base material, and recover only the carbon fibers. Additionally, a technology called the two-step thermal decomposition method has also been developed. This technology first thermally decomposes the resin component to a certain extent in the first step, recovering combustible gas from it. By utilizing this gas as combustion gas for heating, fuel consumption is reduced. Subsequently, in the second step, thermal decomposition is performed again to remove residual resin components on the fiber surfaces through thermal decomposition (for example, see PTL 1).

Moreover, a method utilizing superheated steam has also been proposed. Superheated steam refers to steam that has a temperature above the saturation temperature at a given pressure by further heating saturated steam. Using this superheated steam, there is a method to efficiently thermally decompose the resin component, which is the base material, and recover only the carbon fibers (for example, see PTL 2).

Additionally, a technique of dissolving the resin component in a specific organic solvent has also been proposed. This method is characterized by its low processing temperature of 100 to 150 °C and the fact that no residual resin remains because it is a wet process, thereby maintaining the strength of the recovered carbon fibers (for example, see NPL 1).

### CITATION LIST

### Patent Literature

PTL 1: JP 5347056 B
PTL 2: JP 5876968 B

### Non-patent Literature

NPL 1: Hitachi Chemical Technical Report No. 42 (2004.1)

### SUMMARY

### (Technical Problem)

However, the above-described conventional technologies that have been proposed all have the issue that the recycled carbon fibers (recycled reinforcement material) contain few functional groups, particularly acidic functional groups, on the fiber surfaces, making them difficult to composite with a resin to manufacture reinforced composite materials. Carbon fibers have high strength because they are fibers where carbon is orderly arranged. However, since this orderly arrangement structure of carbon extends to the fiber surface, there are no sites available for chemical bonding with the resin used in composites. Therefore, surface treatment, such as acid treatment, is typically performed to impart functional groups that facilitate compositing with a resin. However, in the case of recycled reinforcement materials, most of these surface functional groups have disappeared.

Consequently, in the regeneration method using the thermal decomposition process proposed in PTL 1, the functional groups on the fiber surfaces are also lost due to thermal decomposition, resulting in recycled fiber surfaces without functional groups. Additionally, since crushing is required before processing, recycling as continuous fibers is not possible. Since the obtained recycled carbon fibers are short and cut, their applications are limited to pellets, non-woven fabrics, and the like.

Furthermore, in the regeneration method using superheated steam proposed in PTL 2, functional groups are slightly imparted to the fiber surfaces. However, since they have only weak oxidative power with neutral water, a sufficient amount of functional groups is not present. Also, similar to PTL 1, regeneration as continuous fibers is not possible because it is necessary to pulverize before processing. Since the obtained recycled carbon fibers are short and cut, their applications are limited to pellets, non-woven fabrics, and the like.

In the regeneration method proposed in NPL 1, which dissolves the resin component in a specific organic solvent, the functional groups that were not utilized during the composite process remain and are not lost. However, since functional groups cannot be imparted to the fiber surfaces, the amount of functional groups decreases compared to the original carbon fibers.

As described above, the conventional methods for separating and recovering reinforcement materials from composite reinforced materials have the following issues: the amount of functional groups on the recycled carbon fiber surfaces is low, and most of recycled fibers are short. These factors make it difficult to recomposite them with a resin for reuse.

Accordingly, an object of the present disclosure is to address the above problem and provide a reinforcement material that has a sufficient amount of functional groups on the surface and exhibits excellent surface adhesion so as to be able to composite with a resin. Another object of the present disclosure is to provide a method for manufacturing a reinforcement material that enables the recovery of a reinforcement material with a sufficient amount of functional groups from a reinforced composite material.

### (Solution to Problem)

The present inventor has conducted intensive studies to solve the above issue and found that the aforementioned objects can be achieved by a method for recovering a reinforcement material from a reinforced composite material, leading to the completion of the present disclosure.

The present disclosure has been conceived of based on the above finding, and the spirit thereof is as follows.
1. A reinforcement material that is a continuous fiber and has a total acidic functional group concentration on a surface of the reinforcement material of 0.4 mmol/g or more and 4.0 mmol/g or less.
2. The reinforcement material according to the aforementioned 1, wherein the reinforcement material is a recycled reinforcement material that has been separated and recovered from a reinforced composite material comprising a base material and a reinforcement material.
3. The reinforcement material according to the aforementioned 1 or 2, wherein the acidic functional group is a carboxyl group, a lactone group, or a phenolic hydroxyl group.
4. The reinforcement material according to any one of the aforementioned 1 to 3, wherein a strong acidic functional group concentration on a surface of the recycled reinforcement material is 0.1 mmol/g or more and 3.0 mmol/g or less.
5. The reinforcement material according to the aforementioned 4, wherein the strong acidic functional group concentration on the surface of the recycled reinforcement material is 0.2 mmol/g or more and 2.0 mmol/g or less.
6. The reinforcement material according to the aforementioned 4 or 5, wherein the strong acidic functional group is a carboxyl group.
7. The reinforcement material according to any one of the aforementioned 1 to 6, wherein the reinforcement material is at least one selected from the group consisting of a carbon fiber, a glass fiber, and a metal fiber.
8. The reinforcement material according to the aforementioned 7, wherein the reinforcement material is a carbon fiber.
9. A method for manufacturing the reinforcement material according to any one of the aforementioned 1 to 8, comprising:
   immersing a reinforced composite material in a decomposition solution containing oxidatively active species derived from sulfuric acid and/or nitric acid as a raw material;
   heating the decomposition solution to decompose a base material or sizing agent; and
   obtaining the reinforcement material by removing the acid on the reinforcement material, washing the reinforcement material with water, and recovering the reinforcement material.
10. The method for manufacturing the reinforcement material according to the aforementioned 9, wherein the decomposition solution is a solution obtained by mixing hydrogen peroxide with sulfuric acid and/or nitric acid solution.
11. The method for manufacturing the reinforcement material according to the aforementioned 9 or 10, wherein the decomposition solution is a solution obtained by electrolyzing sulfuric acid and/or nitric acid solution.
12. The method for manufacturing the reinforcement material according to any one of the aforementioned 9 to 11, wherein obtaining the reinforcement material comprises winding the reinforcement material, which is a continuous fiber, onto a core material.
13. A method for manufacturing a composite material comprising compositing the reinforcement material according to any one of the aforementioned 1 to 8 with a resin.
14. A composite material comprising the reinforcement material according to any one of the aforementioned 1 to 8 and a resin.

### (Advantageous Effect)

According to the present disclosure, it is possible to provide a reinforcement material that has a sufficient amount of functional groups on the surface and exhibits excellent surface adhesion so as to be able to composite with a resin. Additionally, according to the present disclosure, it is possible to provide a method for manufacturing a reinforcement material that enables the recovery of a reinforcement material with a sufficient amount of functional groups from a reinforced composite material.

### DETAILED DESCRIPTION

The following provides a detailed description of embodiments for embodying the present disclosure (hereinafter referred to as "the present embodiment"). Note that the present disclosure is not limited by the description given below, and may be implemented with various changes or modifications that are within the essential scope thereof.

First, a reinforced composite material containing a reinforcement material of the present embodiment will be described.

### [Reinforced Composite Material]

A reinforced composite material of the present embodiment refers to a material of which strength is improved by compositing a base material such as a resin with a reinforcement material that is a different type of material, such as fibers or a filler. The method of compositing is not limited, and may be a method that utilizes interactions such as hydrogen bonding and intermolecular forces, and may be dispersion, adhesion, bonding, adsorption, carrying, placement, or the like.

The reinforced composite material may include a base material, a reinforcement material, and other additives.

### (Reinforcement Material)

The reinforcement material of the present embodiment refers to a material that is compounded or dispersed in a matrix resin serving as the base material of the reinforced composite material. Examples thereof include a carbon fiber, glass fiber, metal fiber, organic high-strength fiber, inorganic filler, carbon nanotube, and cellulose nanofiber. It is preferable that the reinforcement material is at least one selected from the group consisting of a carbon fiber, a glass fiber, and a metal fiber. The reinforcement material is more preferably a carbon fiber.

The reinforcement material can be either fibrous or particulate. Although the definition is not clear, generally, those with a large aspect ratio (length/width) (e.g., aspect ratio of, for example, 100 or more, preferably 200 or more) are called fibrous, and those with a small aspect ratio (length/width) (e.g., aspect ratio of, for example, less than 200, preferably less than 100) are called particulate.

The carbon fiber is a fiber made from an acrylic fiber or pitch (a byproduct of petroleum, coal, coal tar, etc.) by carbonizing it at a high temperature.

The glass fiber is a fiber produced by melting and drawing glass into a fibrous form.

The metal fiber is a fiber produced by processing a metal, such as stainless steel, aluminum, iron, nickel, and copper, into a thread-like form through methods such as plastic working (e.g., rolling), melt spinning, CVD method, etc.

The organic high-strength fiber is a fiber made of a resin such as polyamide, polyester, acrylic resin, polyparaphenylene benzobisoxazole, and polyimide.

These fibers are processed into an intermediate base material such as continuous fibers or non-woven fabric, and composited with the base material.

Here, the continuous fiber refers to a single fiber that is connected without any cut sections and has a length of 30 cm or more. The upper limit of the length is not particularly restricted, but it is, for example, a length that can be wound around a bobbin, typically ranging from 1000 m to 5000 m.

This continuous fiber can be used in the form of a unidirectional layer in which all fibers are arranged parallel to each other or can be used by knitting or weaving. In addition, quasi-isotropic, orthotropic, and anisotropic plates can be produced by stacking unidirectional layers in various directions.

The nonwoven fabric is a sheet of intertwined fibers without weaving the fibers. A nonwoven fabric is produced by bonding or intertwining fibers to each other through thermal, mechanical, or chemical action.

Elements constituting the inorganic filler include, for example, elements in Groups 1 to 16 of the periodic table. This element is not limited, but elements belonging to Groups 2 to 14 of the periodic table are preferred. Specific examples thereof include Group 2 elements (e.g., Mg, Ca, and Ba), Group 3 elements (e.g., La, Ce, Eu, Ac, and Th), Group 4 elements (e.g., Ti, Zr, and Hf), Group 5 elements (e.g., V, Nb, and Ta), Group 6 elements (e.g., Cr, Mo, and W), Group 7 elements (e.g., Mn and Re), Group 8 elements (e.g., Fe, Ru, and Os), Group 9 elements (e.g., Co, Rh, and Ir), Group 10 elements (e.g., Ni, Pd, and Pt), Group 11 elements (e.g., Cu, Ag, and Au), Group 12 elements (e.g., Zn and Cd), Group 13 elements (e.g., Al, Ga, and In), and Group 14 elements (e.g., Si, Ge, Sn, and Pb).

Inorganic compounds containing these elements include oxides (including complex oxides), halides (fluorides, chlorides, bromides, and iodides), oxoacid salts (e.g., nitrates, sulfates, phosphates, borates, perchlorates, and carbonates), and compounds formed from negative elements and the aforementioned elements such as carbon monoxide, carbon dioxide, and carbon disulfide, as well as salts such as hydrocyanic acid, cyanides, cyanates, thiocyanates, and carbides, for example.

One inorganic filler may contain one or more of the aforementioned elements. A plurality of elements may be uniformly or unevenly distributed in the particles, or the surfaces of particles of a compound of one element may be coated with a compound of another element. These inorganic fillers may be used alone or in a combination of two or more.

Among these, preferred inorganic fillers are not limited, but include, for example, at least one element selected from the group consisting of silica, zirconia, titanium, zinc, iron, copper, chromium, cadmium, carbon, tungsten, antimony, nickel, and platinum.

The carbon nanotube is a single or multilayered coaxial tube of six-membered ring networks of carbon (graphene sheets). It is one allotrope of carbon and is sometimes classified as one type of fullerene.

The cellulose nanofiber refers to a thin cellulose fiber from wood, processed to have a width of about 15 nanometers.

In the present embodiment, the content of the reinforcement material in the reinforced composite material is preferably 10 to 80 mass% per 100 mass% of the reinforced composite material. The lower limit is preferably 15 mass% or more, 20 mass% or more, and the upper limit is preferably 75 mass% or less, 70 mass% or less.

The reinforcement material of the present embodiment has a total acidic functional group concentration on the surface of the reinforcement material of 0.4 mmol/g or more and 4.0 mmol/g or less.

By setting the total acidic functional group concentration on the surface of the reinforcement material to 0.4 mmol/g or more, the reactivity with the surface of the base material can be enhanced, and adhesion can be improved. Additionally, by setting the total acidic functional group concentration on the surface of the reinforcement material to 4.0 mmol/g or less, the spreadability of the fibers can be maintained, allowing the reinforcement material to be evenly dispersed in the base material when manufacturing the reinforced composite material.

The total acidic functional group concentration on the surface of the reinforcement material refers to the total amount of all acidic functional groups (mmol/g) present in the vicinity of the surface of the reinforcement material. The total acidic functional group concentration on the surface of the reinforcement material is measured, for example, by an acid-base titration method (Boehm method). Specifically, after a 1 g sample is sampled from the reinforcement material, 30 mL of a 0.05 mol/L sodium hydroxide aqueous solution is added, sealed, and shaken using a shaker. After allowing it to stand, 15 mL of the supernatant liquid is titrated with a 0.05 mol/L hydrochloric acid to measure the concentration. More specifically, it can be measured by the method described in the examples.

Examples of acidic functional groups include carboxyl groups, lactone groups, and phenolic hydroxyl groups, for example.

Among these, the acidic functional groups are preferably strong acidic functional groups (functional groups with high reactivity capable of reacting with weakly basic substances or functional groups), and the strong acidic functional groups more preferably include at least a carboxyl group. This is because the adhesion to the base material can be further enhanced.

The surface functional group concentration on the reinforcement material of the present embodiment is set such that the total acidic functional group concentration, as described above, is 0.4 mmol/g or more from the perspective of improving adhesion with the base material, and 4.0 mmol/g or less from the perspective of the strength of the composite reinforced material. A higher total acidic functional group concentration increases the number of sites for chemical bonding with the base material, thereby improving adhesion. On the other hand, by setting the functional group concentration to 4.0 mmol/g or less, the chemical bonding between fibers does not become excessively strong, ensuring good spreadability of the fibers when manufacturing the composite reinforced material. The good spreadability of the fibers allows the reinforcement material to be evenly dispersed in the base material, which tends to increase the strength of the composite material. Therefore, the total acidic functional group concentration is set within the above numerical range, in the present embodiment.

Similarly, the strong acidic functional group concentration, defined as the amount (mmol/g) of all strong acidic functional groups present in the vicinity of the surface of the reinforcement material, is preferably 0.1 mmol/g or more from the perspective of improving adhesion with the base material, and preferably 3.0 mmol/g or less from the perspective of the strength of the composite reinforced material due to spreadability of the fibers. From a similar perspective, the strong acidic functional group concentration is more preferably 0.15 mmol/g or more, even more preferably 0.2 mmol/g or more, and is more preferably 2.5 mmol/g or less, even more preferably 2.0 mmol/g or less.

The strong acidic functional group concentration can be measured using, for example, an acid-base titration method (Boehm method). Specifically, after a 1 g sample is sampled from the reinforcement material, 30 mL of a 0.05 mol/L sodium bicarbonate aqueous solution is added, sealed, and shaken using a shaker. After allowing it to stand, 15 mL of the supernatant is titrated with a 0.05 mol/L hydrochloric acid to measure the concentration. More specifically, it can be measured by the method described in the examples.

It should be noted that the method for setting the total acidic functional group concentration on the surface of the reinforcement material of the present embodiment to be 0.4 mmol/g or more and 4.0 mmol/g or less is not limited. For example, adjustments such as the acidity and the oxidative power of the acid solution for treatment, the processing time, and the processing temperature can be mentioned. The total acidic functional group concentration tends to increase as the acidity and oxidative power of the acid solution increases, and the total acidic functional group concentration can be suitably increased by using electrolytic sulfuric acid. Additionally, by adjusting the time from the decomposition of the resin by the acid solution to the draining of the acid solution and washing with water, that is, the time the reinforcement material is in contact with the acid solution, the total acidic functional group concentration can be suitably adjusted. By increasing the time the reinforcement material is in contact with the acid solution, the total acidic functional group concentration can be increased.

Similarly, the method for setting the strong acidic functional group concentration on the surface of the reinforcement material of the present embodiment to be 0.2 mmol/g or more and 2.0 mmol/g or less is not particularly limited. For example, adjustments such as the acidity and the oxidative power of the acid solution for treatment, the processing time, and the processing temperature can be mentioned. The strong acidic functional group concentration tends to be increased as the acidity and oxidative power of the acid solution increases, and the strong acidic functional group concentration can be suitably increased by using electrolytic sulfuric acid. Additionally, by adjusting the time from the decomposition of the resin by the acid solution to the draining of the acid solution and washing with water, that is, the time the reinforcement material is in contact with the acid solution, the strong acidic functional group concentration can be suitably adjusted. By increasing the time the reinforcement material is in contact with the acid solution, the strong acidic functional group concentration can be increased.

Furthermore, the reinforcement material of the present embodiment is a continuous fiber. As mentioned above, in order to uniformly disperse the reinforcement material in the base material, the spreadability of the reinforcement material is important, and in this case, a continuous fiber with a longer length of the reinforcement material is preferred. In the case of short fibers, in addition to chemical bonding via functional groups, the fiber ends are more likely to physically entangle with other fibers, thereby reducing spreadability. On the other hand, since the fiber ends of continuous fibers do not entangle with other fibers, the spreadability can be maintained even when the functional group concentration is increased.

In the present embodiment, the reinforcement material of the present embodiment can be suitably processed to produce an intermediate base material.

The intermediate base material of the present embodiment may be a continuous fiber or a nonwoven fabric that includes the reinforcement material.

In the present embodiment, by compounding the above-described reinforcement material or the above-described intermediate base material in the base material such as resin, a recycled reinforced composite material can also be produced.

### (Recycled Reinforcement Material)

Additionally, in the present embodiment, it is also possible to use a recycled reinforcement material that has been separated and recovered from a reinforced composite material containing a base material and a reinforcement material.

It is preferable that the recycled reinforcement material has a strength of 80% or more of the strength of the reinforcement material before recycling and has a shape retention rate of the reinforcement material before and after recycling of 90% or more.

Furthermore, in the present embodiment, it is preferable that the above-described recycled reinforcement material of the present embodiment has a strength of 90% or more of the strength of the reinforcement material before recycling and has a shape retention rate before and after recycling of 80% or more.

It should be noted that the strength of the reinforcement material refers to the one measured by the method described in the examples below. Additionally, the shape retention rate before and after recycling refers to the one measured by the method described in the examples below.

Moreover, in the present embodiment, it is more preferable that the above-described recycled reinforcement material of the present embodiment has a strength of 90% or more of the strength of the reinforcement material before recycling and has a shape retention rate before and after recycling of 90% or more.

Additionally, in the present embodiment, when a reinforced composite material is recycled using the recycling method of the above-described reinforcement material of the present embodiment, it is preferable that the strength of the reinforced composite material recycled using the recycled reinforcement material is preferably 65% or more, more preferably 70% or more, even more preferably 75% or more, and is preferably 80% or less, more preferably 90% or less, of the strength of a reinforced composite material produced using the reinforcement material before recycling.

It should be noted that the strength of the reinforced composite material refers to the one measured by the method described in the examples below.

### (Base Material)

The base material of the present embodiment refers to a resin used as the matrix of the reinforced composite material, and either a thermoplastic resin or a thermosetting resin is used.

The thermoplastic resin refers to a resin that softens when heated to the glass transition temperature or melting point thereof so that it can be molded into the desired shape. Generally, thermoplastic resins are often difficult to machine through processes such as cutting and grinding, and injection molding is widely used where the resin is heated until softened, then injected into a mold and cooled to solidify into the final product. Examples include polyethylene, polypropylene, polystyrene, ABS resins, vinyl chloride resins, methyl methacrylate resins, nylon, fluororesin, polycarbonate, and polyester resins.

The thermosetting resin refers to a resin that, when heated, causes polymerization to form a polymer network structure to harden and cannot be restored to its original state. In use, resins with a relatively low molecular weight so as to have fluidity are shaped into a predetermined shape and then reacted and cured by heating or other means. There are types of resins that are used as adhesives or putties by mixing Component A (base) with Component B (hardener). These are epoxy resins that are thermosetting resins, where a polymerization reaction occurs upon mixing. Thermosetting resins are hard and resistant to heat and solvents. Examples include phenolic resins, epoxy resins, unsaturated polyester resins, and polyurethane.

In the present embodiment, the content of the base material in the reinforced composite material is preferably 20 to 90 parts by mass per 100 parts by mass of the reinforcement material. The lower limit is preferably 25 parts by mass or more, 30 parts by mass or more, and the upper limit is preferably 85 parts by mass or less, 80 parts by mass or less.

### (Other Additives)

Other additives are not particularly limited, and examples include flame retardants, heat stabilizers, antioxidants, light absorbers, mold release agents, lubricants, various stabilizers, antistatic agents, dyes and pigments, and various reagents used in the above-described compounding.

In the present embodiment, the content of other additives in the reinforced composite material may be 0.01 mass% or less, 80 mass% or less, per 100 mass% of the reinforced composite material.

### [Method for Manufacturing Reinforcement Material]

A method for manufacturing the reinforcement material of the present embodiment includes steps of immersing a reinforced composite material in a decomposition solution containing oxidatively active species derived from sulfuric acid and/or nitric acid as a raw material; decomposing the base material by heating the solution; and obtaining the reinforcement material by removing the acid on the reinforcement material, washing the reinforcement material with water, and recovering the reinforcement material.

The immersion and decomposition step may involve the use of a treatment solution and/or heat, and one using the Electrolytic sulfuric acid method is preferred.

The electrolytic sulfuric acid method is a method for processing a composite material characterized in that a reinforced composite material composed of a base material and a reinforcement material is immersed in a treatment solution containing oxidatively active species obtained by electrolyzing a sulfuric acid solution, whereby the base material decomposes into water and carbon dioxide, the decomposition products after decomposition dissolve in the treatment solution, and subsequently, the reinforcement material is removed from the treatment solution.

The oxidatively active species are generated by electrolyzing a sulfuric acid solution under a given current and a given voltage and specifically include hydroxyl radicals, peroxosulfuric acid, peroxodisulfuric acid, and the like.

The method for processing the reinforced composite material of the present embodiment specifically includes:
A) a step of obtaining a treatment solution containing oxidatively active species by electrolyzing sulfuric acid;
B) a step of immersing the reinforced composite material, which is a scrap discarded after use or from the manufacturing process, in the treatment solution to decompose and remove the base material; and
C) a step of washing and drying the reinforcement material from which the base material has been removed to recycle the reinforcement material.

The sulfuric acid solution is a solution containing sulfuric acid (H₂SO₄) and water (H₂O). Here, The concentration of sulfuric acid contained in the sulfuric acid solution is preferably 30 to 95 wt%, more preferably 50 to 80 wt%. This is because if the concentration of sulfuric acid is less than 30 wt%, the necessary amount of oxidatively active species for decomposing the base material of the reinforced composite material cannot be obtained, and the decomposition of the base material takes a long time. Even with concentrated sulfuric acid at a concentration of 98 wt%, it is theoretically possible to generate oxidatively active species by devising the electrolysis method. However, since the current does not easily flow during electrolysis, the amount of oxidatively active species generated is extremely reduced, or the lifespan of the electrodes used for electrolysis is drastically shortened, making it undesirable.

It should be noted that concentrated sulfuric acid, hydrochloric acid, or nitric acid may be added to the treatment solution containing the electrolyzed oxidatively active species. Furthermore, peroxides such as hydrogen peroxide or peroxosulfuric acid may be added to the treatment solution. In this case, the effect of accelerating the decomposition rate of the base material of the reinforced composite material can be achieved.

In the electrolysis of the sulfuric acid solution, platinum electrodes or carbon electrodes can be used. Additionally, in view of durability, so-called diamond electrodes having a thin diamond coating provided on the surfaces of a metal plate can be used for electrolysis of a sulfuric acid solution with a high concentration. As an electrolysis apparatus for sulfuric acid solution, a diaphragm-type electrolytic cell with diamond electrodes is preferably used.

When diamond electrodes are used, the electrical conditions for the electrolysis may include a current density of 0.01 to 10 A/cm² and a voltage of 0.1 to 100 V. These conditions may be appropriately changed depending on factors such as the type of electrodes, the concentration of sulfuric acid in the sulfuric acid solution, and the liquid volume of the sulfuric acid solution.

It should be noted that the electrolysis is required to be performed in a closed system, and it is preferable that the electrolysis is performed in a closed sulfuric acid solution circulation system in which a given amount of a sulfuric acid solution is circulated. The circulation method can be either by using a pump or the like to circulate the liquid in a direction parallel to the electrode surfaces at a flow rate of 50 mL/min or more, or by natural convection in which the liquid is circulated according to the flow of gas generated by the electrolysis.

The processing time for electrolysis is appropriately adjusted depending on the volume of a sulfuric acid solution, the concentration of sulfuric acid, the flow rate of the sulfuric acid solution, the current-carrying conditions, or the like, and the processing time is preferably 0.5 to 10 hours per 1 liter of a sulfuric acid solution for efficient generation of oxidatively active species.

In the case of the sulfuric acid electrolysis method in which a sulfuric acid solution is used for electrolysis as the cathode and anode solutions, sulfuric acid in different concentrations may be used for the cathode and the anode. In particular, in the present disclosure, since the sulfuric acid solution containing oxidatively active species obtained through electrolysis of a sulfuric acid solution with a high concentration is effective in promoting the decomposition of the base material of the reinforced composite material, it is preferable to increase the concentration of sulfuric acid on the anode side and decrease the concentration of sulfuric acid on the cathode side for prolonging the life of the electrodes.

Electricity can be supplied from a variety of conceivable apparatuses, etc., as a power source for electrolysis of the sulfuric acid solution, and it is preferable to use electricity generated from so-called renewable energy sources such as solar cells. The hydrogen (generated from the cathode) and oxygen (generated from the anode) produced by electrolysis can also be collected and converted to electricity or heat.

The method of supplying the resulting sulfuric acid solution containing the oxidatively active species to the treatment bath used for the decomposition of the base material of the reinforced composite material can be either a method of continuously supplying the solution from the electrolysis apparatus to the treatment bath by means of a pump, etc. (continuous method), or a method of circulating a sulfuric acid solution in a closed system so that the treatment solution is collected from the system after electrolysis and the treatment solution is supplied to the treatment bath (batch method). Additionally, the apparatus may be used in combination with an apparatus that can heat, cool, or pressurize the collected treatment solution.

Additionally, since the treatment solution after treating the reinforced composite material can be reused repeatedly, it can be collected, adjusted in concentration, and reused as a sulfuric acid solution to generate oxidatively active species again.

It is preferable to heat the treatment solution containing oxidatively active species to enhance the decomposition of the base material of the reinforced composite material. The heating temperature depends on the boiling point of the treatment solution; however, the treatment solution is preferably heated to a temperature of 100 °C or higher for efficient and rapid decomposition of the base material of the reinforced composite material.

Alternatively, acids other than sulfuric acid, such as hydrochloric acid and nitric acid, may also be mixed.

**In** the step of obtaining the reinforcement material by removing the acid on the reinforcement material, washing it with water, and recovering the reinforcement material, methods such as allowing the acid solution to drain quickly along the edge of the vessel, piping, cooling tubes, etc., and/or using rollers or bars to remove the acid solution swiftly are preferably employed.

### [System for Recovering Reinforcement Material from Composite Material and Utilizing Carbon Dioxide Generated during Recovery as Industrial Raw Material]

A system for recovering a reinforcement material from the composite material of the present embodiment and utilizing the carbon dioxide generated during recovery as an industrial raw material involves separating carbon dioxide from the decomposition gas generated during recovery using a separation membrane, an acidic gas absorption system, or the like to separate neutral gases such as oxygen and nitrogen, and utilizing the separated carbon dioxide as an industrial raw material.

### EXAMPLES

The following provides a description of the present disclosure through specific examples and comparative examples. However, the present disclosure is not limited to the following examples.

In the examples and comparative examples described later, after a reinforced composite material was produced under the following conditions, the reinforcement material was separated and recovered.

### (Production of Reinforced Composite Material)

Pressure tanks made of CFRP were used as composite materials. The pressure tanks made of CFRP were produced as follows. A reinforcing material was wound around a core material using a filament winder while an epoxy resin as the base material was applied on the reinforcing material. The resin was then cured at 150 °C for 30 minutes to obtain a pressure tank.

### - Epoxy resins

EPIKOTE 828 (manufactured by Japan Epoxy Resin Co., Ltd.): 20 parts by mass
EPIKOTE 834 (manufactured by Japan Epoxy Resin Co., Ltd.): 20 parts by mass
EPIKOTE 1001 (manufactured by Japan Epoxy Resin Co., Ltd.): 25 parts by mass
EPIKOTE 154 (manufactured by Japan Epoxy Resin Co., Ltd.): 35 parts by mass
   - Curing agent: DICY7 (manufactured by Japan Epoxy Resin Co., Ltd.): 4 parts by mass
   - Curing accelerator: Omicure 24 (manufactured by P.T.I Japan Co., Ltd.): 5 parts by mass
   - Polyvinyl formal: VINYLEC K (manufactured by Chisso Corporation): 5 parts by mass

### Reinforcement material:

- Carbon fiber: Torayca T700SC-12K-50C (manufactured by Toray Industries, Inc.)

### (Measurement of Total Acidic Functional Group Concentration and Strong Acidic Functional Group Concentration: Boehm Method)

In the examples and comparative examples described later, after the reinforcement material was recovered, the total acidic functional group concentration and strong acidic functional group concentration were measured as follows:
(1) Measurement of total acidic functional group concentration: 30 mL of a 0.05 mol/L sodium hydroxide aqueous solution was added to 1 g of the sample and tightly sealed. After shaking for 4 hours using a shaker, the sample was allowed to stand for 8 hours or longer. 15 mL of the supernatant was titrated with a 0.05 mol/L hydrochloric acid. A blank test was conducted using the same procedure, and the difference in titration volume between the blank test and the sample test was used to calculate the amount of strong acidic functional groups.
(2) Measurement of Strong Acidic Functional Group Concentration

30 mL of a 0.05 mol/L sodium bicarbonate aqueous solution was added to 1 g of the sample and tightly sealed. After shaking for 4 hours using a shaker, the sample was allowed to stand for 8 hours or longer. 15 mL of the supernatant was titrated with a 0.05 mol/L hydrochloric acid. A blank test was conducted using the same procedure, and the difference in titration volume between the blank test and the sample test was used to calculate the amount of strong acidic functional groups.

### (Measurement of Interfacial Shear Strength)

The interfacial shear strength was measured by a microdroplet test.

### (1) Preparation of Resin Droplets

A fiber was fixed onto a dedicated mount, and the fiber diameter was measured using an optical microscope (Digital Microscope V-HX6000, manufactured by Keyence Corporation).

A resin was prepared by weighing the main agent (JER801N, manufactured by Mitsubishi Chemical Corporation) and the curing agent (CUREZOL 2E4MZ, manufactured by Shikoku Chemicals Corporation) at a weight ratio of 100:8 (main agent : curing agent), then manually mixing for approximately 2 minutes to form a resin solution.

The resin solution was applied to the fiber, and the formation of a liquid droplet was confirmed. Subsequently, the sample was cured by heating at 140 °C for 1 hour, 160 °C for 1 hour, and 170 °C for 2 hours.

### (2) Measurement

A microdroplet test was conducted under the following conditions. Measurement device: Composite material interface property evaluation device (Model HM410) manufactured by Toei Sangyo Co., Ltd.
Test rate: 0.12 mm/min
Number of measurements: n = 15.

### (3) Observation

The carbon fiber-resin interface after the microdroplet test and the carbon fiber surface before application of the resin were observed.
Device used: GeminiSEM 460, manufactured by Carl Zeiss
Acceleration voltage: 0.8 kV
Observation mode: Outlens secondary electron image
Coating: None

### (4) Evaluation

⊚: The shear strength was 30 MPa or more, and cohesive failure of the resin droplet occurred, leaving the resin in a fibrous state
O: The shear strength was 20 MPa or more and less than 30 MPa, and cohesive failure of the resin droplet occurred, leaving the resin in a fibrous state
x: The shear strength was less than 20 MPa, and the resin droplet and fiber were detached, leaving no resin in a fibrous state

### (Evaluation of Spreadability)

The spreadability was evaluated by aligning a fiber bundle, immersing it in water, and observing the fibers after being allowed to stand for 3 minutes.
O: The fibers separated individually
x: The fibers remained in bundles without separating individually

### [Example 1]

The electrolytic sulfuric acid method 1 was used as the surface treatment method for the reinforcement material.

Specifically, diamond electrodes with an electrode area of 700 cm² were used, and while water cooling the electrodes, a sulfuric acid solution with a concentration of 50% was electrolyzed in a diaphragm-type electrolytic cell to prepare a treatment solution containing oxidatively active species. The amount of the sulfuric acid solution (treatment solution) electrolyzed in one batch was 10 L. The current was 3 to 10 A/cm², the voltage was 170 to 200 V, and the processing time was 120 minutes. The electric field was a closed system, and circulation was performed using a pump.

In 60 L of the prepared electrolytic sulfuric acid solution, 100 m of a carbon fiber (Torayca T700SC-12K-50C, manufactured by Toray Industries, Inc.) was immersed in the treatment solution at 120 °C for 10 hours to decompose the sizing agent of the reinforcement material. Subsequently, for recovering the reinforcement material, the reinforcement material was rapidly passed through rollers to remove the acid solution, then washed with water and dried, and wound onto a core as continuous fiber.

The total time from the start of the immersion treatment to the completion of draining and washing was 12 hours.

The obtained reinforcement material had a total acidic functional group concentration of 1.8 mmol/g and a strong acidic functional group concentration of 0.8 mmol/g.

The carbon fiber was successfully obtained in continuous fibrous form.

The interfacial shear strength with the epoxy resin was 39 MPa, and cohesive failure of the resin droplet occurred, leaving the resin in a fibrous state.

The spreadability of the continuous fiber was favorable.

Short fibers obtained by cutting the continuous fiber into 1 cm lengths could not exhibit spreadability.

### [Example 2]

The electrolytic sulfuric acid method 2 was used as the method for separating and recovering the reinforcement material from the reinforced composite material.

The electrolytic sulfuric acid solution was prepared in the same manner as in Example 1.

In 60 L of the prepared electrolytic sulfuric acid solution, one pressure tank (120 kg) was immersed in the treatment solution and then subjected to immersion treatment at 120 °C for 10 hours to decompose the base material of the reinforced composite material. For recovering the reinforcement material, the reinforcement material was rapidly passed through rollers to remove the acid solution, then washed with water and dried, and wound onto a core as continuous fiber.

The total time from the start of the immersion treatment to the completion of draining and washing was 12 hours.

The obtained recycled reinforcement material had a total acidic functional group concentration of 1.4 mmol/g and a strong acidic functional group concentration of 0.6 mmol/g.

The carbon fiber was recovered in continuous fibrous form.

The interfacial shear strength with the epoxy resin was 36 MPa, and cohesive failure of the resin droplet occurred, leaving the resin in a fibrous state.

The spreadability of the continuous fiber was favorable.

Short fibers obtained by cutting the continuous fiber into 1 cm lengths could not exhibit spreadability.

### [Example 3]

The electrolytic sulfuric acid method 3 was used as the method for separating and recovering the reinforcement material from the reinforced composite material.

The electrolytic sulfuric acid solution was prepared in the same manner as in Example 1.

In 50 L of the prepared electrolytic sulfuric acid solution, 10 L of a commercially available 30% hydrogen peroxide solution (manufactured by FUJIFILM Wako Pure Chemical Corporation) was added. One pressure tank (120 kg) was immersed in the treatment solution and then subjected to immersion treatment at 120 °C for 5 hours to decompose the base material of the reinforced composite material. For recovering the reinforcement material, the reinforcement material was rapidly passed through rollers to remove the acid solution, then washed with water and dried, and wound onto a core as continuous fiber.

The total time from the start of the immersion treatment to the completion of draining and washing was 12 hours.

The obtained recycled reinforcement material had a total acidic functional group concentration of 2.2 mmol/g and a strong acidic functional group concentration of 1.2 mmol/g.

The carbon fiber was recovered in continuous fibrous form.

The interfacial shear strength with the epoxy resin was 46 MPa, and cohesive failure of the resin droplet occurred, leaving the resin in a fibrous state.

The spreadability of the continuous fiber was favorable.

Short fibers obtained by cutting the continuous fiber into 1 cm lengths could not exhibit spreadability.

### [Example 4]

The electrolytic sulfuric acid method 4 was used as the method for separating and recovering the reinforcement material from the reinforced composite material.

The electrolytic sulfuric acid solution was prepared in the same manner as in Example 1.

In 50 L of the prepared electrolytic sulfuric acid solution, 10 L of a commercially available 30% hydrogen peroxide solution (manufactured by FUJIFILM Wako Pure Chemical Corporation) was added. One pressure tank (120 kg) was immersed in the treatment solution and then subjected to immersion treatment at 120 °C for 5 hours to decompose the base material of the reinforced composite material. For recovering the reinforcement material, the reinforcement material was rapidly passed through rollers to remove the acid solution, then washed with water and dried, and wound onto a core as continuous fiber.

The total time from the start of the immersion treatment to the completion of draining and washing was 18 hours.

The obtained recycled reinforcement material had a total acidic functional group concentration of 4.0 mmol/g and a strong acidic functional group concentration of 2.0 mmol/g.

The carbon fiber was recovered in continuous fibrous form.

The interfacial shear strength with the epoxy resin was 49 MPa, and cohesive failure of the resin droplet occurred, leaving the resin in a fibrous state.

The spreadability of the continuous fiber was favorable.

Short fibers obtained by cutting the continuous fiber into 1 cm lengths could not exhibit spreadability.

### [Example 5]

The concentrated sulfuric acid method 1 was used as the method for separating and recovering the reinforcement material from the reinforced composite material.

In 60 L of a commercially available 95% sulfuric acid (manufactured by FUJIFILM Wako Pure Chemical Corporation), one pressure tank (120 kg) was immersed in the treatment solution and then subjected to immersion treatment at 120 °C for 24 hours to decompose the base material of the reinforced composite material. For recovering the reinforcement material, the reinforcement material was rapidly passed through rollers to remove the acid solution, then washed with water and dried, and wound onto a core as continuous fiber.

The total time from the start of the immersion treatment to the completion of draining and washing was 12 hours.

The obtained recycled reinforcement material had a total acidic functional group concentration of 0.5 mmol/g and a strong acidic functional group concentration of 0.3 mmol/g.

The carbon fiber was recovered in continuous fibrous form.

The interfacial shear strength with the epoxy resin was 26 MPa, and cohesive failure of the resin droplet occurred, leaving the resin in a fibrous state.

The spreadability of the continuous fiber was favorable.

Short fibers obtained by cutting the continuous fiber into 1 cm lengths could not exhibit spreadability.

### [Example 6]

The concentrated sulfuric acid method 2 was used as the method for separating and recovering the reinforcement material from the reinforced composite material.

In 50 L of a commercially available 95% sulfuric acid (manufactured by FUJIFILM Wako Pure Chemical Corporation), 10 L of a commercially available 30% hydrogen peroxide solution (manufactured by FUJIFILM Wako Pure Chemical Corporation) was added. One pressure tank (120 kg) was immersed in the treatment solution and then subjected to immersion treatment at 120 °C for 12 hours to decompose the base material of the reinforced composite material. For recovering the reinforcement material, the reinforcement material was rapidly passed through rollers to remove the acid solution, then washed with water and dried, and wound onto a core as continuous fiber.

The total time from the start of the immersion treatment to the completion of draining and washing was 12 hours.

The obtained recycled reinforcement material had a total acidic functional group concentration of 0.8 mmol/g and a strong acidic functional group concentration of 0.4 mmol/g.

The carbon fiber was recovered in continuous fibrous form.

The interfacial shear strength with the epoxy resin was 29 MPa, and cohesive failure of the resin droplet occurred, leaving the resin in a fibrous state.

The spreadability of the continuous fiber was favorable.

Short fibers obtained by cutting the continuous fiber into 1 cm lengths could not exhibit spreadability.

### [Example 7]

The concentrated nitric acid method was used as the method for separating and recovering the reinforcement material from the reinforced composite material.

In 60 L of a commercially available 90% nitric acid (manufactured by FUJIFILM Wako Pure Chemical Corporation), one pressure tank (120 kg) was immersed in the treatment solution and then subjected to immersion treatment at 120 °C for 48 hours to decompose the base material of the reinforced composite material. For recovering the reinforcement material, the reinforcement material was rapidly passed through rollers to remove the acid solution, then washed with water and dried, and wound onto a core as continuous fiber.

The total time from the start of the immersion treatment to the completion of draining and washing was 12 hours.

The obtained recycled reinforcement material had a total acidic functional group concentration of 0.4 mmol/g and a strong acidic functional group concentration of 0.2 mmol/g.

The carbon fiber was recovered in continuous fibrous form.

The interfacial shear strength with the epoxy resin was 22 MPa, and cohesive failure of the resin droplet occurred, leaving the resin in a fibrous state.

The spreadability of the continuous fiber was favorable.

Short fibers obtained by cutting the continuous fiber into 1 cm lengths could not exhibit spreadability.

### [Comparative Example 1]

The thermal decomposition method was used as the method for separating and recovering the reinforcement material from the reinforced composite material.

One pressure tank (120 kg) was placed in a large heating oven and subjected to decomposition of the base material under a nitrogen atmosphere at 700 °C for 24 hours. During decomposition, the shape of the pressure tank could not be maintained and collapsed, making it impossible to wind the reinforcement material onto a core.

Neither the total acidic functional group concentration nor the strong acidic functional group concentration of the obtained recycled reinforcement material was detected.

Additionally, the carbon fiber became entangled into a ball shape, preventing recovery of the carbon fiber in continuous fibrous form.

The interfacial shear strength with the epoxy resin was 5 MPa, and the resin droplet and the fiber were detached, leaving no resin in a fibrous state.

The spreadability of short fibers of 1 cm length was favorable.

### [Comparative Example 2]

The superheated steam method was used as the method for separating and recovering the reinforcement material from the reinforced composite material.

One pressure tank (120 kg) was placed in a large heating oven, and subjected to decomposition of the base material under a nitrogen atmosphere at 700 °C for 12 hours by introducing superheated steam generated using a superheated steam generator UPSS (manufactured by Tokuden Co., Ltd.). During decomposition, the shape of the pressure tank could not be maintained and collapsed, making it impossible to wind the reinforcement material onto a core.

The obtained recycled reinforcement material had a total acidic functional group concentration of 0.2 mmol/g and a strong acidic functional group concentration of 0.05 mmol/g.

Additionally, the carbon fiber became entangled into a ball shape, preventing recovery of the carbon fiber in continuous fibrous form.

The interfacial shear strength with the epoxy resin the interfacial shear strength with the epoxy resin was 15 MPa, and the resin droplet and the fiber were detached, leaving no resin in a fibrous state.

The spreadability of short fibers of 1 cm length was favorable.

### [Comparative Example 3]

The solvent decomposition method was used as the method for separating and recovering the reinforcement material from the reinforced composite material.

In 60 L of a commercially available benzyl alcohol (manufactured by FUJIFILM Wako Pure Chemical Corporation), 6 kg of commercially available tripotassium phosphate (manufactured by FUJIFILM Wako Pure Chemical Corporation) was added. One pressure tank (120 kg) was immersed in the treatment solution and subjected to immersion treatment at 120 °C for 96 hours. However, the base material of the reinforced composite material was not decomposed, and the reinforcement material thus could not be recovered.

### [Comparative Example 4]

The electrolytic sulfuric acid method 5 was used as the method for separating and recovering the reinforcement material from the reinforced composite material.

The electrolytic sulfuric acid solution was prepared in the same manner as in Example 1.

In 60 L of the prepared electrolytic sulfuric acid solution, one pressure tank (120 kg) was immersed in the treatment solution. After immersion treatment at 120 °C for 10 hours to decompose the base material of the reinforced composite material, the reinforcement material was allowed to stand for one day without rapidly draining the acid solution. Thereafter, the reinforcement material was washed with water, dried, and wound onto a core as continuous fiber.

The total time from the start of the immersion treatment to the completion of draining and washing was 30 hours.

The obtained recycled reinforcement material had a total acidic functional group concentration of 5.0 mmol/g and a strong acidic functional group concentration of 2.5 mmol/g.

The carbon fiber was recovered in continuous fibrous form.

The interfacial shear strength with the epoxy resin was 46 MPa, and cohesive failure of the resin droplet occurred, leaving the resin in a fibrous state.

The continuous fibers could not exhibit spreadability.

Short fibers obtained by cutting the continuous fiber into 1 cm lengths could not exhibit spreadability.

### [Comparative Example 5]

The electrolytic sulfuric acid method 6 was used as the method for separating and recovering the reinforcement material from the reinforced composite material.

The electrolytic sulfuric acid solution was prepared in the same manner as in Example 1.

In 60 L of the prepared electrolytic sulfuric acid solution, one pressure tank (120 kg) was immersed in the treatment solution. After immersion treatment at 120 °C for 10 hours to decompose the base material of the reinforced composite material, the reinforcement material was allowed to stand for more than one day without rapidly draining the acid solution. Thereafter, the reinforcement material was washed with water, dried, and wound onto a core as continuous fiber.

The total time from the start of the immersion treatment to the completion of draining and washing was 3 hours.

The obtained recycled reinforcement material had a total acidic functional group concentration of 0.2 mmol/g and a strong acidic functional group concentration of 0.05 mmol/g.

The carbon fiber was recovered in continuous fibrous form. The interfacial shear strength with the epoxy resin the interfacial shear strength with the epoxy resin was 15 MPa, and the resin droplet and the fiber were detached, leaving no resin in a fibrous state.

The spreadability of the continuous fiber was favorable.

The spreadability of short fibers of 1 cm length was favorable.

### [Comparative Example 6]

The electrolytic oxidation method was used as the method for separating and recovering the reinforcement material from the reinforced composite material.

A 3 cm square CFRP section was cut from the prepared pressure tank.

### (1) Pre-treatment:

As the pre-treatment, the CFRP was heated in a muffle furnace at 450 °C for 0.5 hours in air.

### (2) Electrochemical treatment:

The heat-treated CFRP was filled into a plastic mesh basket with a diameter of 80 mm and a height of 100 mm, which was then placed on the anode side and fully immersed in a 0.1 M NaOH aqueous solution. A carbon electrode was used as the anode, and a cylindrical Cu electrode was used as the cathode. Anodic oxidation was performed for an electrolysis time of 3 hours under an applied voltage of 4.5 V and a current density of 0.21 A/m². The distance between electrodes was set to 40 mm.

After anodic oxidation, the electrolyte was placed into a tank equipped with stirring blades and subjected to high-speed stirring to finely crush the embrittled epoxy resin. The obtained slurry was filtered using a coarse stainless steel mesh basket, and repeated water washing was performed to remove epoxy resin residues. The recovered carbon fibers remaining on the mesh were neutralized and washed, then dried at 150 °C for 2 hours.

The obtained recycled reinforcement material had a total acidic functional group concentration of 0.4 mmol/g and a strong acidic functional group concentration of 0.1 mmol/g.

The carbon fiber could not be recovered in continuous fibrous form.

The interfacial shear strength with the epoxy resin the interfacial shear strength with the epoxy resin was 18 MPa, and the resin droplet and the fiber were detached, leaving no resin in a fibrous state.

The spreadability of short fibers of 1 cm length was favorable.

**[Table 1]**

| | Methods | Time from start of immersion treatment to completion of water washing (h) | Total acidic functional group concentration (mmol/g) | Strong acidic functional group concentration (mmol/g) | Interfacial shear strength | Obtainment of continuous fiber | Openability of continuous fibers |
|---|---|---|---|---|---|---|---|
| Example 1 | Electrolytic sulfuric acid method 1 | 12 | 1.8 | 0.8 | | O | O |
| Example 2 | Electrolytic sulfuric acid method 2 | 12 | 1.4 | 0.6 | | O | O |
| Example 3 | Electrolytic sulfuric acid method 3 | 12 | 2.2 | 1.2 | | O | O |
| Example 4 | Electrolytic sulfuric acid method 4 | 18 | 4.0 | 2.0 | | O | O |
| Example 5 | Concentrated sulfuric acid method 1 | 12 | 0.5 | 0.3 | O | O | O |
| Example 6 | Concentrated sulfuric acid method 2 | 12 | 0.8 | 0.4 | O | O | O |
| Example 7 | Concentrated nitric acid method | 12 | 0.4 | 0.2 | O | O | O |
| Comparative Example 1 | Thermal decomposition method | - | ND | ND | x | x | - |
| Comparative Example 2 | Superheated steam method | - | 0.2 | 0.05 | x | x | - |
| Comparative Example 3 | Solvent decomposition method | - | Unable to decompose | Unable to decompose | Unable to decompose | Unable to decompose | Unable to decompose |
| Comparative Example 4 | Electrolytic sulfuric acid method 5 | 30 | 5.0 | 2.5 | | O | x |
| Comparative Example 5 | Electrolytic sulfuric acid method 6 | 3 | 0.2 | 0.05 | x | O | O |
| Comparative Example 6 | Electrolytic oxidation method | - | 0.4 | 0.1 | x | x | - |

According to Examples 1 to 7, it is demonstrated that the continuous fibers that had high concentrations of total acidic functional groups and strong acidic functional groups on the carbon fiber surfaces and exhibited good spreadability were obtained. The results indicated that the fibers facilitated their use in composite applications with a resin.

In Comparative Examples 1, 2, and 6, the concentrations of total acidic functional groups and strong acidic functional groups on the carbon fiber surfaces were low, and the fibers could not be recycled as continuous fibers, making it difficult to reuse them in composite applications with a resin. In Comparative Example 3, no carbon fiber was obtained. In Comparative Example 4, the concentrations of total acidic functional groups and strong acidic functional groups on the carbon fiber surfaces were excessively high, preventing the obtainment of continuous fibers with good spreadability. In Comparative Example 5, although continuous fibers were recycled, the concentrations of total acidic functional groups and strong acidic functional groups on the carbon fiber surfaces were low, making it difficult to reuse them in composite applications with a resin. Therefore, it was demonstrated that these were not effective methods for manufacturing a reinforcement material.

### INDUSTRIAL APPLICABILITY

According to the present disclosure, a reinforcement material has a high adhesion strength with a resin because it has a sufficient amount of functional groups on the surface of the reinforcement material derived from a composite material. Additionally, the reinforcement material can be uniformly dispersed in the base material due to its good spreadability. Therefore, it is possible to provide a reinforcement material suitable for manufacturing a reinforced composite material with a high strength.

## Claims

1. A reinforcement material that is a continuous fiber and has a total acidic functional group concentration on a surface of the reinforcement material of 0.4 mmol/g or more and 4.0 mmol/g or less.

2. The reinforcement material according to claim 1, wherein the reinforcement material is a recycled reinforcement material that has been separated and recovered from a reinforced composite material comprising a base material and a reinforcement material.

3. The reinforcement material according to claim 1 or 2, wherein the acidic functional group is a carboxyl group, a lactone group, or a phenolic hydroxyl group.

4. The reinforcement material according to claim 1 or 2, wherein a strong acidic functional group concentration on a surface of the recycled reinforcement material is 0.1 mmol/g or more and 3.0 mmol/g or less.

5. The reinforcement material according to claim 4, wherein the strong acidic functional group concentration on the surface of the recycled reinforcement material is 0.2 mmol/g or more and 2.0 mmol/g or less.

6. The reinforcement material according to claim 3, wherein the strong acidic functional group is a carboxyl group.

7. The reinforcement material according to claim 1 or 2, wherein the reinforcement material is at least one selected from the group consisting of a carbon fiber, a glass fiber, and a metal fiber.

8. The reinforcement material according to claim 7, wherein the reinforcement material is a carbon fiber.

9. A method for manufacturing the reinforcement material according to claim 1 or 2, comprising:
immersing a reinforced composite material in a decomposition solution containing oxidatively active species derived from sulfuric acid and/or nitric acid as a raw material;
heating the decomposition solution to decompose a base material or sizing agent; and
obtaining the reinforcement material by removing the acid on the reinforcement material, washing the reinforcement material with water, and recovering the reinforcement material.

10. The method for manufacturing the reinforcement material according to claim 9, wherein the decomposition solution is a solution obtained by mixing hydrogen peroxide with sulfuric acid and/or nitric acid solution.

11. The method for manufacturing the reinforcement material according to claim 9, wherein the decomposition solution is a solution obtained by electrolyzing sulfuric acid and/or nitric acid solution.

12. The method for manufacturing the reinforcement material according to claim 10, wherein the decomposition solution is a solution obtained by electrolyzing sulfuric acid and/or nitric acid solution.

13. The method for manufacturing the reinforcement material according to claim 9, wherein obtaining the reinforcement material comprises winding the reinforcement material, which is a continuous fiber, onto a core material.

14. A method for manufacturing a composite material comprising compositing the reinforcement material according to claim 1 or 2 with a resin.

15. A composite material comprising the reinforcement material according to claim 1 or 2 and a resin.
